Europäisches Patentamt

(19) European Patent Office

Office européen des brevets

(11) Publication number: **0 055 089**
**A1**

# EUROPEAN PATENT APPLICATION

(12)

(21) Application number: **81305940.9**

(22) Date of filing: **18.12.81**

(51) Int. Cl.³: **G 11 B 19/16,** G 11 B 19/20, **G 11 B 3/08,** G 11 B 3/32

(30) Priority: **20.12.80 GB 8040911**

(71) Applicant: **BSR LIMITED, Powke Lane Cradley Heath, Warley West Midlands B64 5QH (GB)**

(43) Date of publication of application: **30.06.82 Bulletin 82/26**

(72) Inventor: **Wearing, Brian John, 86 Kempson Avenue Wylde Green, Sutton Coldfield West Midlands (GB)**

(74) Representative: **Leach, John Nigel et al, FORRESTER & BOEHMERT Widenmayerstrasse 4/I, D-8000 München 22 (DE)**

(84) Designated Contracting States: **BE DE FR IT LU NL SE**

(54) **Improvements in or relating to disc record players.**

㊬ A disc record player comprising a turntable (10), a motor (13) for rotating the turntable and a pick-up arm (16) and motor control circuit (22) incorporates switching means associated with a pick-up arm rest (21) operative to cause the motor (13) to be energised and rotate the turntable (10) on removal of the pick-up arm (16) from its rest (21). The presence of the pick-up (16) on its rest (21) prevents energisation of the motor (13). The switching means is characterised in that the pick-up arm (16) forms the only moving part of the switch.

EP 0 055 089 A1

Title: "Improvements in or relating to Disc Record
       Players"

The present invention relates to a disc record
player comprising a turntable for supporting a disc
record, a motor for rotating the turntable, and a pick-up
arm mounted for pivotal movement relative to the turntable axis and adjusted to carry an electro-mechanical
transducer, hereinafter referred to as a pick up, and has
particular application to switching means for energising
a motor adapted to rotate the turntable of the disc
record player.

In the past it has been usual to provide switching
means which, in a manually operable disc record player is
operated manually to start rotation of the turntable. In
automatically operated disc record players, a manually
operable switch may be provided which starts a sequence
of events, including energisation of a motor to rotate
the turntable, such energistation may occur on operation
of the manually operable switch or at a later stage
during said sequence of events.

It is an object of the present invention to provide
in or for a disc record player improved switching means
to permit energisation of the motor.

According to the present invention we provide a disc
record player switching means adapted to permit of
energisation of a motor for rotating the disc record
player turntable, said switching means being associated
with a pick-up arm rest on which the pick-up arm is
supported in an "at rest" position when not in use,
characterised in that said switching means comprising a
single movable member having a first position in which
energisation of the motor is possible, and a second position in which energisation of the motor is prevented and in that the pick-up arm comprises said single movable member and said second position comprises said "at rest" position of said pick-up arm.

The switching means of the present invention has the advantage of being adapted to cause energisation of a motor for rotating a disc record player in a manner that does not entail any significant force having to be applied by the pick-up arm. The switching means being operable in response to the presence or absence of the pick-up arm from the rest.

Thus the switching means is operable even by arms which are counterbalanced by an amount which results in a very small "tracking weight" at the pick up. Such small "tracking weight" is a common feature of good quality disc record players.

The switching means may comprise a solid state switching device or circuit having sensing means adapted to sense when the pick-up arm is in its "at rest" position, said sensing means being operative on removal of the pick-up arm from its rest may cause some change in said solid state switching device or circuit to permit of energisation of the motor.

Such sensing means may operate on the principle that the presence of the pick-up arm on its rest causes a change in capacitance, inductance, or resistance in the sensing means associated with the circuit. Any reactive forces on the pick-up arm are so small as to be insignificant.

As a further alternative, the switching means may comprise sensing means adapted to respond to a change in light conditions, such a change being dependent upon the presence or absence of the pick up arm from its rest. The responsive means being operative to energise the motor when the pick-up arm is removed from the rest. With such switching means being adapted to respond to a change in light conditions, there will be no reactive force on the pick-up arm at all.

The light responsive means may be adapted to operate in ambient light conditions, the arrangement being such that when the pick-up arm is on its rest the light responsive means is covered or at least shaded by the pick-up arm, removal of the arm from the rest allowing light or an increase in light to fall on the light responsive means which may itself be adapted to generate a voltage e.g. a photo cell, or change the conditions in an electrical circuit e.g. a photo resistor. Such a voltage or change is arranged by connection of the light responsive means in a suitable circuit to cause energisation of the motor.

In addition to the light responsive means there may be provided a light source, for example a light emitting diode, the pick-up arm being arranged to either break or complete a light path between the light emitting member and the light responsive member.

According to a further aspect of the invention we provide a disc record player having a turntable driven by an electric motor, and a pick-up arm made, at least partially, from an electrically conductive material, and arranged such that, when in an "at rest" position on a pick-up arm rest, an electrical circuit is completed so as to cause de-energisation of the motor.

In one such an arrangement one electrical connection to the pick-up arm may be made through the pick-up arm support bearing, and an electrical contact may be provided on the pick-up arm rest for co-operation with the conductive part of the pick-up arm itself.

The arrangement may be such that when the arm is on the rest an electrical circuit is completed, the completion of said circuit being operative to open circuit a current supply circuit to the motor. Removal of the arm from the rest interrupts the said electrical circuit which has the effect of allowing current to be supplied to the motor through the current supply circuit.

The pick-up arm for example be made wholly or partially from aluminium.

It is necessary for the pick-up arm to carry wires from the pick-up to a connection whereby the pick-up can be connected to amplifier means. The pick-up arm may be adapted to carry a further wire connected to an electrically conductive contact provided on the pick-up arm, which contact is situate at least partially on the outer surface of the pick-up arm and adapted to co-operate with a further contact provided on the rest. The contact provided on the rest is connected in an electrical circuit, the arrangement being such that when the contact on the pick-up arm and the contact on the rest are in contact with each other, a circuit is completed to cause de-energisation of the motor and, as soon as the pick-up arm is removed from the rest, said circuit is broken to allow energisation of the motor.

The completing of a circuit by positioning the pick-up arm on its rest may be adapted to change the current flowing in a semi-conductor switching circuit to cause energisation or de-energisation of the motor depending on the absence or presence of the pick-up arm on the rest respectively. Such circuits may be arranged in a manner such that the current flowing through the circuit, including the contacts between the arm and the rest, is very small.

Delay means may be provided whereby the absence of the pick-up arm from its rest does not immediately cause energisation of the motor such that inadvertent movement for a brief period of time such as vibration to which the arm may be subjected does not cause unwanted energisation of the motor.

In a still further alternative, the pick-up arm rest may be provided with a pair of contacts, which pair of contacts are "closed" by contact with an electrically conductive pick-up arm or electrically conductive part associated therewith, the contacts being connected in a circuit operative when the contacts are open to cause energisation of the motor.

Two of the embodiments of the present invention will now be described in more detail, with reference to the accompanying drawings wherein:

FIGURE 1 is a schematic view of a record player turntable and pick-up arm assembly;

FIGURE 2 is a schematic diagram of a first arrangement of the switching means of the present invention; and

FIGURE 3 is an alternative arrangement of switching means including switching delay means.

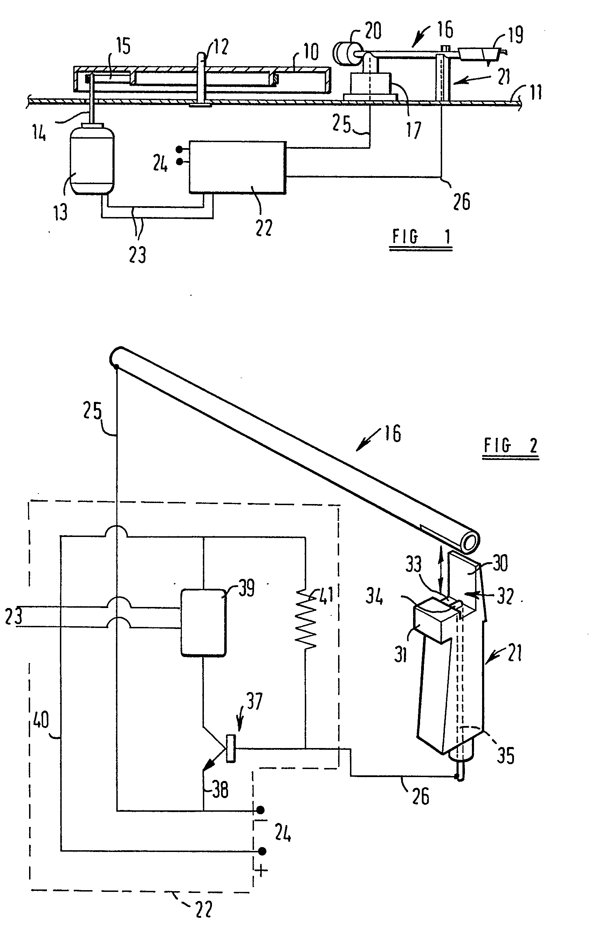

Referring first to Figure 1, a turntable 10 is mounted on a base plate 11 for rotation about a spindle 12.

The turntable 10 is rotated by a motor 13, the spindle 14 of which is connected to the turntable by a drive belt 15.

A pick-up arm generally indicated at 16 has a mount 17 supported by the base plate 11, which support 17 provides a pivotal mounting for the pick-up arm 16 which comprises a pick-up 19 at one end, and a counterbalance weight 20 is provided at the other end.

The pick-up arm 16 is supported, when in an at rest position, on a pick-up arm rest 21.

The motor 13 is controlled from a motor control circuit 22 connected to the motor 13 by wires 23 and supplied with power from a power supply connected to input terminals 24.

A further connector 25 connects the motor control circuit 22 to the pick-up arm 16 which is made from an electrically conductive material. The pick-up arm rest 21 is provided with an electrical contact so positioned that the contact will be in electrical contact with the arm 16 when the pick-up arm 16 is in its at rest position. The electrical contact in the support 21 is connected to wire 26. The arrangement is such that when the pick-up arm 16 is in its at rest position, a circuit between the wires 25 and 26 is completed by the pick-up arm 18. The completion of this circuit will be operative to de-energise the motor 13 so that the turntable 10 will not be rotated.

Removal of the pick-up arm 16 from its rest 21 will cause circuit comprising wires 25 and 26 to open thus influencing the motor control circuit 22 to cause energisation of the motor 13 to rotate the turntable 10.

Referring now to Figure 2, a simplified circuit for causing energisation or de-energisation of the motor 13 is illustrated.

The pick-up arm 16 is made from electrically conductive material such as aluminium. The pick-up arm rest 21 has a first upwardly extending part 30, a second upwardly extending part 31 and a recess 32 between the upwardly extending parts, in which recess 32 the pick-up arm 16 is supported. The upwardly extending parts 30 and 31 preventing undesired horizontal movement of the pick-up arm 16 from its rest 21.

A supporting surface 33 at the base of the recess 32 has an electrically conductive contact 34 extending upwardly, just proud of the surface 33. The contact 34 is electrically connected by a conductor 35 through wire 26 to the base of an NPN transistor 37. The emitter of transistor 37 is connected to line 38 and both to line 25 which is connected to the pick-up arm 16 and to the negative terminal 24. The line 25 is in electrical connection with the pick-up arm 16 and is connected thereto in any suitable manner which does not adversely affect the movement of the pick-up arm 16. The connection could, for example, be made through the support bearing by means of which the pick-up arm 16 is supported relative to the base plate 11.

The collector of transistor 37 is connected through a motor drive circuit 39 to the positive terminal of a D.C. supply through line 40. The positive of the D.C. supply is also connected to the base of transistor 37 through resistor 41.

When the pick-up arm 16 is supported by the rest 21, the base of transistor 37 will be connected through line 26, conductor 35, contact 34, pick-up arm 16 and line 25 to the negative terminal. Thus, there will be no forward bias on the base of transistor 37 relative to the emitter. The transistor 37 will therefore be nonconducting or "switched off".

When the pick-up arm 16 is removed from the rest, the line 26 and hence the base of transistor 37 will no longer be connected to the negative of the D.C. supply terminal 24 since the base of transistor 37 will remain connected through resistor 41 the positive of the supply, the base will become forward biased relative to the emitter thus rendering the transistor 37 conductive or "switched on" and connecting the motor drive circuit 39 to the D.C. supply terminals 24 thus enabling energisation of the motor 13 through lines 23.

As soon as the pick-up 16 is replaced on the rest 21, the base of transistor 37 will once again be connected directly to the negative terminal of the supply terminals 24 thereby removing the forward bias from the base of the transistor 37 and the transistor 37 will switch off, disconnecting the motor drive circuit 39 from the supply, therefore the motor 13 will no longer be energised and the turntable will cease to be driven.

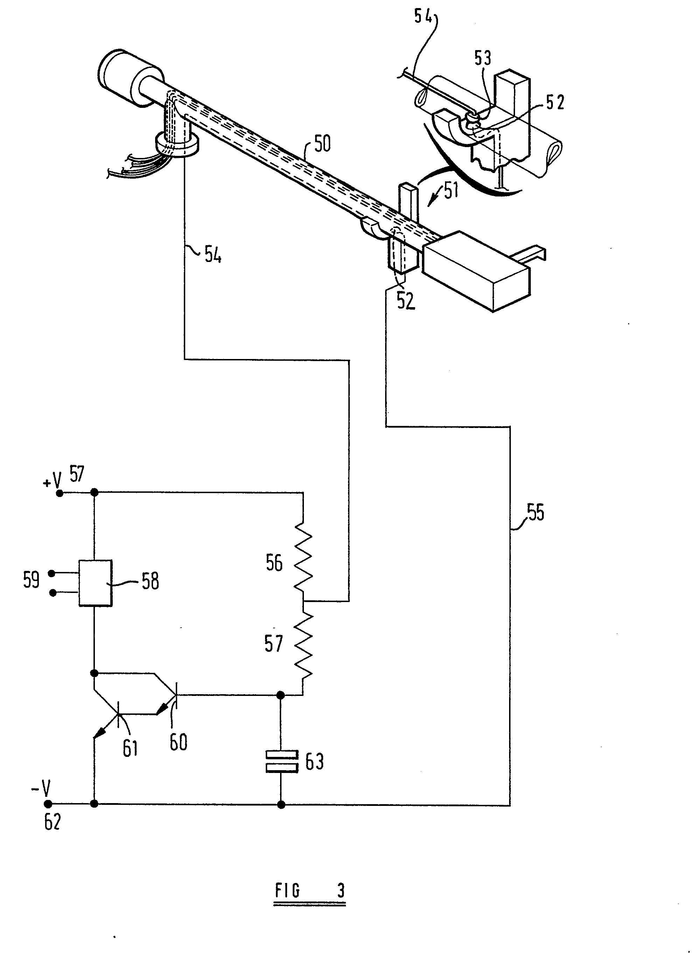

Referring now to Figure 3, an alternative arrangement is shown in which a slightly different method of completing a circuit through the pick-up arm is utilised and a switching circuit incorporating delay means is used instead of the switching circuit shown in Figure 2.

In the embodiment shown, the pick-up arm 50 is supported by a pick-up arm rest 51, the pick up arm rest 51 being provided with an electrically conductive contact 52 and the arm 50 is provided with an electrically conductive contact 53 which is electrically connected to line 54. The contact 52 is electrically connected to line 55.

When the arm 50 is in place on the rest 51, line 54 is in electrical connection with line 55 through contacts 52 and 53. If the arm 50 is removed from the rest 51, the contacts 52 and 53 are opened disconnecting line 54 from 55.

Line 54 is connected between resistors 56 and 57, resistor 56 being connected to a positive supply terminal 57 and also to motor drive circuit 58. Motor drive circuit 58 has a pair of terminals 59 connected to the motor for rotating the turntable.

Resistor 57 is connected to the base of transistor 60, the emitter of which is connected to the base of transistor 61, the emitter of which is connected to the negative supply terminal 62 and line 55.

Between line 55 and the base of transistor 60 is a capacitor 63.

When the pick-up arm 50 is in position on its rest 51 and line 54 is electrically connected to line 55 through contacts 52 and 53, line 54 will be connected to the negative terminal (zero volts) thus capacitor 63 will be discharged and the base of transistor 60 also at zero volts thus transistors 60 and 61 will both be nonconducting.

When the pick-up arm 50 is removed from the rest 51, line 54 will be disconnected from the negative terminal thus capacitor 63 will charge from the positive supply terminal through resistors 56 and 57 until transistor 60 is sufficiently forward biased to conduct which in turn will cause the potential of the base of transistor 61 to rise causing transistor 61 to conduct and thus switch on the power supply to the motor drive circuit 58.

When the arm 50 is replaced on the rest, line 54 will once again be connected to the negative terminal 62 allowing capacitor 63 to discharge through resistor 57, the value of which is selected that a transistor 60 and 61 turn off gradually to avoid any interference.

A significant advantage is obtained in providing two transistors 60 and 61 rather than a single transistor since the current that flows through lines 55 and 54 and hence through the contacts 51 and 52 is significantly reduced when the pick-up arm 50 is in position on the rest 51.

The resistors 56, 57 and capacitor 63 provide delay means whereby current will not immediately be supplied to motor drive circuit 58 and hence the motor to drive the turntable until the shorter time has elapsed after the pick-up arm 50 has been removed from the rest 51.

Such delay means ensures that if for example the record player turntable assembly is subjected to any vibration, causing frequent and instantaneous making and breaking of the contacts 52 and 53, the motor drive circuit 58 will not be supplied with power and hence the motor 13 will not be continually switched on and off, which switching may well cause interference in radio receiving apparatus for example.

The switching means of the present invention has been described in the specific embodiments with reference to physical contacts, one on the arm and one on the support, however, it will be appreciated that as aforementioned other forms of switching means in which the presence of the pick-up arm 50 on its rest 51 may cause a change in the light responsive device or a change in inductance or capacitance in a circuit may alternatively be employed, such switching means having the advantage that the lines 25 in the first embodiment and 54 in the second embodiment may not be necessary.

CLAIMS:

1. A disc record player switching means adapted to permit of energisation of a motor (13) for rotating the disc record player turntable (10), said switching means being associated with a pick-up arm rest (21) on which the pick-up arm (16) is supported in an "at rest" position when not in use, characterised in that said switching means comprising a single movable member having a first position in which energisation of the motor (13) is possible, and a second position in which energisation of the motor (13) is prevented and in that the pick-up arm (16) comprises said single movable member and said second position comprises said "at rest" position of said pick-up arm (16).

2. A disc record player as claimed in Claim 1 characterised in that said switch means comprises a solid state switching device (17) or circuit (22) having sensing means (34) adapted to sense when the pick-up arm (16) is in its "at rest" position, said sensing means (34) being operative on removal of the pick-up arm (16) from its rest to cause change in said solid state switching device (37) or circuit (22) to permit of energisation of the motor (13).

3. A disc record player as claimed in Claim 1 or Claim 2 characterised in that said pick-up arm (16) is made, at least partially, from an electrically conductive material, and arranged such that, when in an "at rest" position on a pick-up arm rest (21), an electrical circuit (25, 26) is completed to cause de-energisation of the motor (13).

4. A disc record player as claimed in Claim 3 characterised in that a first electrical conductor (25) is connected to the pick-up arm (16) or an electrically conductive part thereof, and a second conductor (26) is connected to a contact (34) provided on the pick-up arm rest (21), the arrangement being such that when the pick-up arm (16) is in its "at rest" position, said first conductor (25) and said second conductor (26) are in electrical communication with each other.

5. A disc record player as claimed in Claim 3 characterised in that a pair of electrical contacts are provided on said pick-up arm rest (21), each contact being connected to said electrical circuit wherein said contacts are positioned in spaced relationship with each other and an electrically conductive part of said pick-up arm (16) is adapted, when the pick-up arm (16) is in its "at rest" position, to provide electrical communication between said contacts.

6. A disc record player as claimed in any one of the preceding claims characterised in that said sensing means includes a circuit (22), the resistance of which is altered by the presence of the pick-up arm (16) on its rest (21).

7. A disc record player as claimed in Claim 2 characterised in that the sensing means is connected in a circuit (22), the inductance of which is changed by the presence of the pick-up arm (16) on its rest (21).

8. A disc record player as claimed in Claim 2 characterised in that the sensing means is connected in a circuit (22), the capacitance of which is changed by the presence of the pick-up arm (16) on its rest (22).

9. A disc record player as claimed in any one of the preceding claims characterised in that delay means (57, 63) are provided operative on removal of the pick-up arm (16) from its rest (21) to delay switching on the motor for a predetermined period of time.

FIG 1

FIG 2

FIG    3

## DOCUMENTS CONSIDERED TO BE RELEVANT

| Category | Citation of document with indication, where appropriate, of relevant passages | Relevant to claim |
|---|---|---|
| A | FR - A - 1 266 899 (GEBRUDER STEI-DINGER) <br> * Page 2, left-hand column, line 31 - page 2, right-hand column, line 28; figures 1,2 * | 1-6 |
| A | GB - A - 859 371 (HANSEN) <br> * Page 2, line 130 - page 3, line 20; figures 2,4 * | 1,2,5, 6 |
| A | CH - A - 289 748 (THIEBAUT) <br> * Page 2, lines 36-65; figures 1-4 * | 5,7 |
| A | FR - A - 1 254 123 (THERMINDEX) <br> * Page 1, right-hand column, lines 5-35; page 2, left-hand column, lines 7-20; figures 1-3 * | 2,5,7 |
| A | FR - A - 2 088 690 (LE VEO) <br> * Whole document * | 8,9 |

**CLASSIFICATION OF THE APPLICATION (Int. Cl. 3)**

G 11 B 19/16
19/20
3/08
3/32

**TECHNICAL FIELDS SEARCHED (Int.Cl. 3)**

G 11 B

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| The Hague | 03-03-1982 | SANDRI |

EPO Form 1503.1 06.78